**Europäisches Patentamt**

**European Patent Office**

**Office européen des brevets**

(19)

(11) **EP 1 150 227 A1**

(12) ## EUROPEAN PATENT APPLICATION

(43) Date of publication:
31.10.2001 Bulletin 2001/44

(51) Int Cl.$^7$: **G06F 17/60**

(21) Application number: 00309859.7

(22) Date of filing: 06.11.2000

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **28.04.2000 US 561535**<br><br>(71) Applicant: **LUCENT TECHNOLOGIES INC.**<br>**Murray Hill, New Jersey 07974-0636 (US)**<br><br>(72) Inventors:<br>• **Jakobsson, Bjorn Markus**<br>**Hoboken, New Jersey 07030 (US)** | • **Reiter, Michael Kendrick**<br>**Raritan, New Jersey 08869 (US)**<br>• **Silberschatz, Abraham**<br>**Warren, New Jersey 07059 (US)**<br><br>(74) Representative:<br>**Watts, Christopher Malcolm Kelway, Dr. et al**<br>**Lucent Technologies (UK) Ltd,**<br>**5 Mornington Road**<br>**Woodford Green Essex, IG8 0TU (GB)** |

(54) **Anonymous and secure electronic commerce**

(57)    Anonymous delivery and payment techniques for use in conjunction with electronic commerce are disclosed. A user, upon entering into an electronic transaction with a merchant, provides the merchant with a unique identifier. For each transaction entered into by this user, the unique identifier provided to various merchants changes. Upon receipt of the identifier, the merchant places the identifier on a label on a package containing the goods to be delivered to the user and provides the package to a trusted third party shipper. The shipper accesses a database to associate the identifier with a particular user's address. The shipper thereafter replaces the label with a label containing the user name and address and delivers the package to the user. Various techniques are disclosed for the generation, storage, and use of the unique identifiers by the user and shipper. Further, an anonymous payment technique may be coupled with the anonymous delivery technique which allow the shipper to authenticate the payment amount agreed to by the user so that the shipper can pay the merchant for the goods and recover the amount paid from the user.

FIG. 1

EP 1 150 227 A1

## Description

## Field of the Invention

The present invention relates generally to electronic commerce. More particularly, the present invention relates to anonymous and secure delivery of, and payment for, goods ordered via a data network.

## Background of the Invention

As the number of electronic commerce transactions increases, privacy becomes more of a concern. Some purchasers are reluctant to engage in electronic commerce because of the possibility of tracking and profiling online purchases. As such, these purchasers prefer conventional "brick and mortar" businesses because of the anonymity provided by traditional, especially cash, transactions.

The major obstacle to providing anonymity in online transactions arises from the very nature of electronic transactions in that, a product, which is purchased online, must be physically delivered to the purchaser. This, of course, requires that the purchaser provide his/her name and address to the merchant so that the product may be shipped. Merchants collect purchase information and use it for marketing purposes, such as mass mailings. This anonymity problem is a major obstacle to the electronic commerce industry.

One solution is described in U.S. Patent No. 6,006,200 ("Boies et al."), in which customer name and address information is entrusted to a database of a trusted third party, such as a shipping company. Each customer receives a unique identifier which is stored in the database associated with the customer's name and address. After the database entry is set up, a customer may make an online purchase and provide the merchant with only the unique identifier. The merchant places the unique identifier on the physical package containing the purchased item and provides the package to the trusted third party shipping company. The shipping company then determines the customer name and address based on the unique identifier and delivers the package to the customer.

While the technique described in the Boies et al. patent provides some level of anonymity, there are several problems with the proposed solution. First, transactions in a system which utilizes that scheme are so-called linkable, in that one or more merchants may collect purchase information over a period of time, and the collected purchase information may be correlated such that certain information about purchasers associated with particular identifiers may be discoverable. Given a large time period and a large number of transactions, even the name and address of the purchasers associated with particular unique identifiers may be determinable with some degree of accuracy. Another problem with the Boies et al. technique is that it does not take into account payment for the purchased item. Even though the delivery mechanism is anonymous to some degree, the payment for the purchase provides another problem and another lack of anonymity. Since most online purchases are made using a credit card, the merchant must know the purchaser's name and address in order to process the order. Of course, although not addressed in Boies et al., anonymous payment may be arranged though another trusted third party. However, it would be logistically difficult to coordinate such a combination of trusted third parties, purchaser, and merchant.

What is needed in order to stimulate the electronic commerce industry is a non-linkable anonymous delivery technique. Further benefits could be obtained if such a delivery technique could be coupled with an improved payment scheme which would allow the purchaser to remain anonymous.

## Summary of the Invention

When a user purchases goods to be shipped from a merchant, the user provides the merchant with a unique identifier. Thereafter, the merchant provides a package containing the goods to a trusted third party shipper who is capable of associating the unique identifier with the user. In accordance with the present invention, and in a departure from the prior art, succeeding unique identifiers provided by a particular user to one or more merchants, changes during each of a sequence of transactions. As a result, and in accordance with an advantage of the invention, knowledge of a number of identifiers collected over even a large period of time, will not provide any useful information about purchasers and their purchases. Whereas the prior art technique of each user using the same identifier for multiple transactions rendered the transactions linkable, the inventive technique of using different identifiers for multiple transactions renders the transactions unlinkable.

In accordance with an embodiment of the invention, a merchant places the unique identifier received from a user on a package label and provides the package to a third party trusted shipper who associates the unique identifier with a user and delivers the package to the user's address. The shipper, during a previous registration process, has already associated multiple unique identifiers with the particular user. The pre-association may be accomplished in various ways. In one embodiment, the shipper generates multiple unique identifiers and provides these identifiers to the user. Both the user and the shipper store these identifiers in a computer memory. Thereafter, during an online transaction, the user provides one of the identifiers to the merchant. When the shipper receives a package having an identifier on the label, the shipper performs a database lookup in order to find the received identifier and to determine the associated user address.

In accordance with another embodiment, the user and shipper may generate identifiers dynamically based on known values of parameters which have been exchanged between the user and the shipper. In accordance with a particular embodiment, these parameters are a unique key assigned to each user, along with a counter which is incremented by a known increment algorithm during successive online transactions. Since the counter changes after each transaction, the identifiers received by merchants in connection with successive transactions are different and non-linkable by the merchants. In another particular embodiment, the parameters are a unique key along with a random number generated by the user.

Due to possible counter synchronization errors, which will be described in further detail below, the shipper may store multiple records, containing a sequence of unique identifiers, for each user. This allows for the technique to operate correctly even in the presence of a certain level of synchronization error. In accordance with yet another technique, even if the synchronization error is beyond the certain level, association of an identifier with the appropriate user may still be accomplished through the use of extrapolation techniques. New unique identifiers may be extrapolated using shipper database information alone, or in conjunction with additional information provided to the shipper.

In accordance with another embodiment of the invention, an anonymous payment technique is coupled with the above described anonymous delivery technique. In accordance with this embodiment, the shipper pays the merchant for the goods, and the user pays the shipper the amount paid for the goods, the shipping charge, and an optional transaction processing fee. The shipper authenticates the user's agreement to pay for the goods using messages and encrypted messages sent from the user to the merchant and forwarded from the merchant to the shipper. Upon authentication of the purchase price, the shipper can be assured that the user agreed to pay a specific price for the goods being delivered. As such, the shipper can pay the merchant an authenticated amount for the goods and the shipper can be assured that the user agreed to pay the authenticated amount for the goods.

These and other advantages of the invention will be apparent to those of ordinary skill in the art by reference to the following detailed description and the accompanying drawings.

**Brief Description of the Drawings**

Fig. 1 shows an arrangement of elements and is used to describe an embodiment of the invention;
Fig. 2 shows an arrangement of elements and is used to describe another embodiment of the invention;
Fig. 3 illustrates the contents of database records and the extrapolation of database information in accordance with an embodiment of the invention;
Fig. 4 shows an arrangement of elements and is used to describe another embodiment of the invention; and
Fig. 5 shows an arrangement of elements and is used to describe an embodiment of the invention in which a payment technique is coupled to the delivery technique.

**Detailed Description**

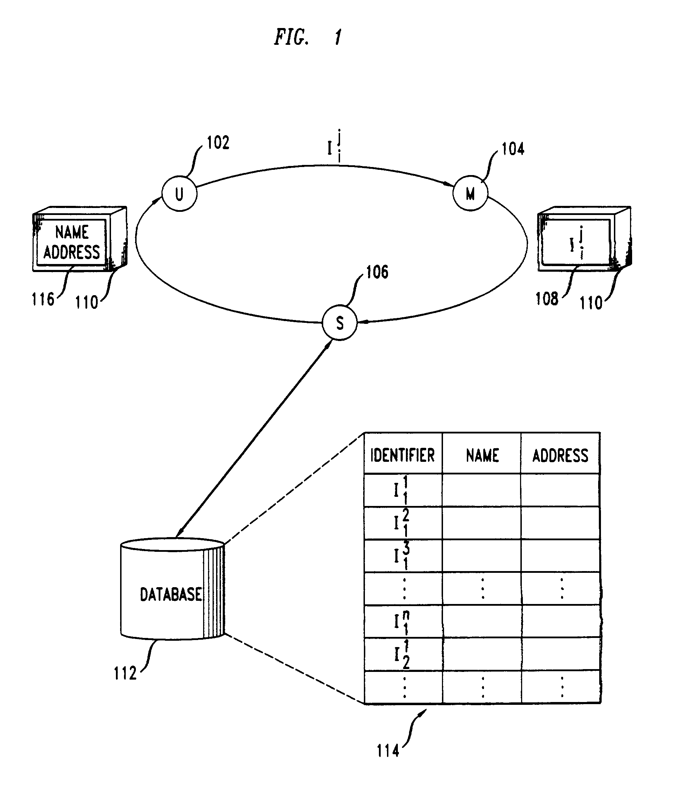

One embodiment of the invention will be described in conjunction with Fig. 1, which represents a user U 102, a merchant M 104, and a shipper S 106. Initially, the user 102 and merchant 104 are in communication and agree that the user 102 will purchase a product from merchant 104. This communication is typically via a user computer and a merchant computer communicating via a data network (e.g. the Internet). At this point, we will ignore the issue of payment for the product. Techniques for adding anonymous payment will be described below. Once the terms of the sale have been agreed upon, the user 102 sends an identifier, $I_i^j$, to the merchant 104. In accordance with an aspect of the invention, and in a departure from the prior art, the identifier sent from a user to a merchant changes with each transaction. As such, the notation $I_i^j$ refers to the $j$ th identifier of the $i$ th user. Thus, for each of a sequence of transactions, an ith user will send one of a sequence of identifiers $I_i^1$, $I_i^2$, $I_i^3$, $\cdots$, $I_i^n$. Thus, for the first transaction with a merchant, the $i$ th user will send identifier $I_i^1$ to the merchant. Thereafter, for the next transaction between that same user and the same or different merchant, the user will send the identifier $I_i^2$. Since the identifier changes with each transaction, it is impossible for merchants to discover any information about purchasers, even if in possession of information relating to a large number of transactions over a large time period. As such, the invention substantially reduces the linkability problem described above.

Returning now to Fig. 1, upon receipt of the identifier $I_i^j$, the merchant 104 places the identifier on a label 108 of the package 110 containing the product ordered by the user 102 during the transaction. At this point, the merchant 104 does not know the identity of the user 102 nor the address of the user 102. The merchant 104 does know that the user's identifier for this transaction is $I_i^j$, and that the user 102 has a relationship with shipper 106 such that the shipper 106 can properly deliver the package 110 to the user 102. As such, the merchant 104 provides the package 110 to the shipper 106.

Upon receipt of the package 110, the shipper 106 reads the label 108 to determine the identifier $I_i^j$. It is noted that the label 108 is advantageously in a machine readable format such that the shipper may automate the reading of labels. Of course, the particular machine readable format of the label will dictate both the technique used by the merchant 104 in placing the identifier on the label 108 and the technique used by the shipper 106 in reading the identifier from the label. As one example, the merchant may print a bar code label which is readable by the shipper using a bar code scanner. Once the shipper 106 reads the identifier $I_i^j$, the shipper 106 access a database 112 which contains a database table 114 which stores associations between identifiers and user names and addresses. As shown in Fig. 1, the table stores multiple identifiers for each user. For example, for user 1, the table 114 is shown storing $n$ identifiers. The shipper 106 performs a database lookup to determine the name and address associated with the identifier read from the label 108 for the package 110 received from the merchant 104. The identifiers are designed such that they are large enough to ensure that each identifier uniquely identifies one database record and the possibility of duplicates is extremely small and assumed not to exist. The generation of the identifiers will be described in further detail below.

Upon the shipper 106 finding the appropriate database record matching the received identifier, the shipper 106 will place a name and address label 116 on the package 110 and ship the package 110 to the user 102. Thus, in this way, the user 102 anonymously receives a product from the merchant 104. Only the shipper 106, who is a trusted third party, can correlate identifiers with user names and addresses. As described above, a benefit of this technique over the prior art anonymous delivery methods is that, since a user uses a different unique identifier for each successive online transaction, the technique of the present invention is not linkable. That is, even though merchants may collect transaction information, such information is difficult to link to any one particular user.

It is noted that the steps described herein as being performed by the shipper may be advantageously performed using a programmable computer. Such a computer comprises a processor for executing computer program code stored in a memory which is accessible by the processor. As used herein, the term memory is used to refer to any computer readable medium, including without limitation, random access memory (RAM), read only memory (ROM), magnetic disk, optical disk, and holographic memory. In an advantageous embodiment, the computer program code is stored in a high speed memory, such as a RAM, which is connected to the computer processor. The computer program code required to implement the invention may be written in any well known computer language. Given the present description of the invention, one of ordinary skill in the art to which the invention pertains could readily write the program code necessary to implement the invention. Further, the computer would communicate with database 112 in a well known manner. A user interacts with the computer using well known input/output devices and techniques (e.g. display screen, keyboard, mouse). Programmable computers of the type described herein are well known in the art and as such, further details are not required here.

In order for the above described scheme to work correctly, a particular identifier $I_i^j$ being used by a user 102 must be pre-associated with that user's name and address in the database table 114. There are various techniques for carrying out this pre-association.

In a first embodiment, the identifiers to be used by a particular user are generated in advance by the shipper and provided to the user for storage in the user's computer. For example, when the user 102 desires to subscribe for anonymous delivery services as described herein, the user registers with the shipper 106 and requests a sequence of identifiers. The shipper 106 generates a number $n$ of such identifiers and provides these $n$ identifiers to the user. The shipper stores these $n$ identifiers in its database table 114. Thus, the $n$ identifiers generated for the ith user would be $I_i^1, I_i^2, I_i^3, ..., I_i^n$. These same $n$ identifiers $I_i^1, I_i^2, I_i^3, ..., I_i^n$ would also be stored in the computer of user $i$. In accordance with this embodiment, when the shipper receives an identifier $I_i^j$ from a merchant, the shipper looks for the unique record that contains that identifier to determine the name and address for shipping. After an identifier is used, it may be deleted from the storage of both the user's computer and the shipper's database 112, because, as described above, each unique identifier is only used once. It would be recognized that this embodiment requires a great deal of storage, at both the user's computer and at the shipper's database. This is so especially in view of the fact that the unique identifiers $I_i^j$ must be fairly large to ensure that there is no duplication.

In accordance with another embodiment of the invention, the user and shipper generate the identifiers dynamically, on an as needed basis. In this embodiment, when a user registers with the shipper as a subscriber to the service, the shipper provides a unique key for the user. For the ith user, we will call this key $K_i$. The shipper also provides the user with an initial value for a counter. For the $i$th user, we will call this counter $C_i$. The counter will change incrementally, according to some known increment algorithm which is known to both the user and the shipper. For example, the algorithm may be a simple change in value from $C_i$ to $C_i + s$, where s is a positive or negative integer. Of course, the increment algorithm may be any algorithm known to both the shipper and the user. As a simple notation, we will use the notation $C_i + 1$ to refer to the counter $C_i$ which has been incremented one time in accordance with its increment algorithm. In accordance with this embodiment, the identifier $I_i^j$ is computed as a one-way function of $K_i$ and $C_i$ such that the user and shipper can dynamically generate $I_i^j$ using knowledge of $K_i$ and $C_i$. The function is one-way in that $K_i$ and $C_i$ cannot be determined from a knowledge of $I_i^j$.

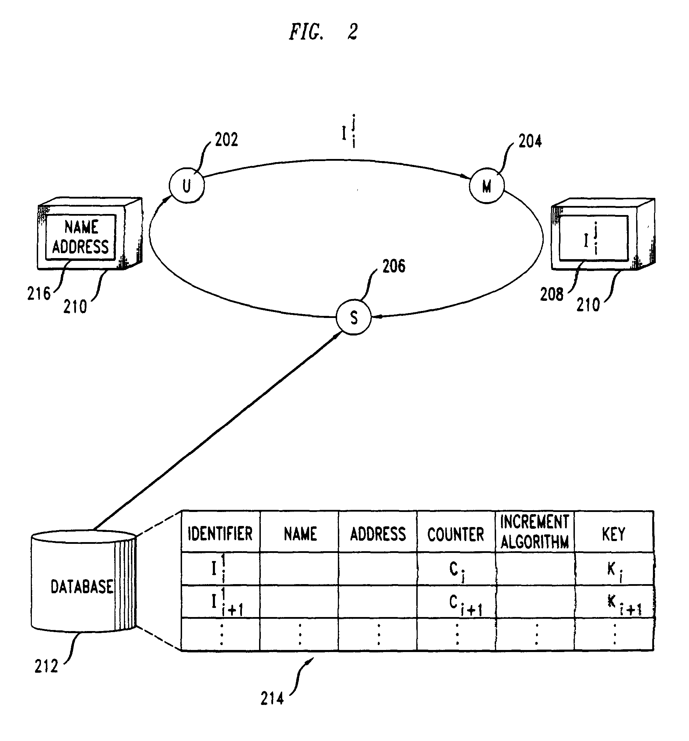

This embodiment is illustrated in conjunction with Fig. 2. In this embodiment, when the user 202 engages in a transaction with the merchant 204, the user 202 dynamically generates $I_i^j$ based on values of $K_i$ and $C_i$ stored in the user's computer and sends the identifier $I_i^j$ to the merchant 204 . The user increments the value of $C_i$ to $C_i$ +1 based on the increment algorithm so that during the next transaction, the user will generate a different $I_i^j$. On the shipper side, when the shipper 206 receives the package 210 from the merchant 204 containing the identifier $I_i^j$ on the label 208, the shipper 206 searches its database 212 for a record containing a matching identifier as described above.

In accordance with this embodiment, the shipper database 212 stores a database table 214 as shown in Fig. 2. For each user $i$, the database table 214 contains a record storing the unique identifier $I_i^j$ generated using the current value of the counter $C_i$, the name and address of the user, the current value of the counter $C_i$, the increment algorithm, and the user's key $K_i$.

When the shipper 206 finds the identifier $I_i^j$ received on the label 208 in the database table 214, the shipper prints a label 216 with the name and address associated with the identifier and ships the package 210 to the user. In this embodiment, the shipper also updates the database record for the user as follows. The shipper increments the value of $C_i$ in accordance with the increment algorithm in the record. The shipper then computes a new identifier $I_i^j$ based on $K_i$ and the updated value of $C_i$. Thus, in this embodiment, the storage concerns of the above described embodiment are solved because the user and shipper store the information required to dynamically generate the unique identifiers rather than storing a large number of pre-computed identifiers.

One possible problem with the above described embodiment in which the identifiers are dynamically generated is that the user and the shipper must remain in proper synchronization. That is, the counter $C_i$ values maintained by the user and the shipper must be the same, or the dynamically generated identifiers will not match. There are several ways to encounter synchronization problems. First, consider the situation in which the user sends an identifier $I_i^j$ to a merchant. The user then increments its counter $C_i$ in accordance with the above described technique. However, prior to the merchant sending the package having the identifier $I_i^j$ on its label, the merchant computer crashes and the merchant looses the information pertaining to the transaction, and so the shipper never receives the identifier $I_i^j$ from the merchant. As such, the shipper never increments the counter $C_i$ associated with this particular user, and thus the user counter $C_i$ and the associated shipper counter $C_i$ are out of synchronization. During the next transaction of this user, the user will generate the next identifier based on the incremented counter (i.e., a counter value of $C_i$ +1) but upon receipt of that identifier, the shipper will not be able to find it in its database because the record for that user contains an identifier that was generated using a non-incremented counter value of $C_i$.

Another way for the user and the shipper to get out of synchronization is as follows. Consider a user which enters into a transaction with a first merchant and sends an identifier $I_i^j$ to the merchant. The user then increments its counter $C_i$ in accordance with the above described technique. The user then enters into another transaction with a second merchant and sends the next identifier $I_i^{j+1}$, based on the incremented counter value $C_i$ +1 to the second merchant. However, the second merchant's package reaches the shipper first, so that the shipper receives the identifier $I_i^{j+1}$ before receiving identifier $I_i^j$. At this point, the shipper's database record for this user still contains the identifier $I_i^j$. Thus, the system is out of synchronization and will not operate properly.

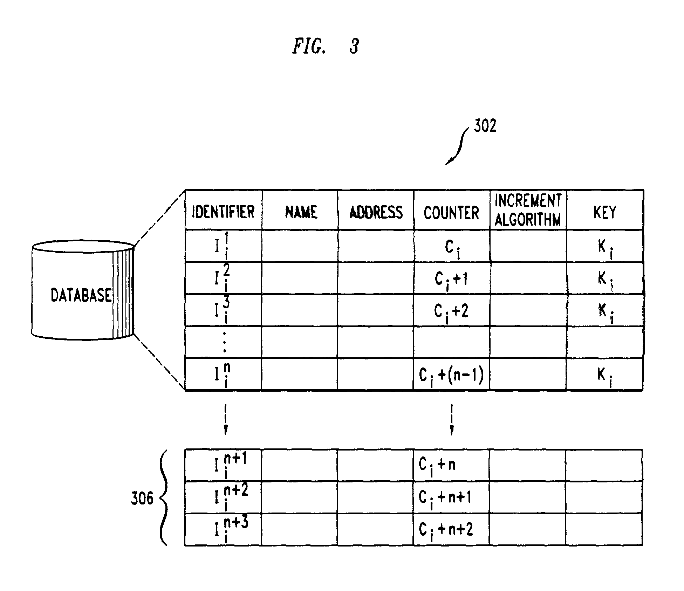

One solution to the synchronization problem is to configure and maintain a database table 302 as shown in Fig. 3. In this embodiment, a sequence of identifiers is stored for each user. Table 302 shows the stored records for the ith user. The table 302 stores $n$ records containing the identifiers $I_i^1, I_i^2, I_i^3, ... I_i^n$. These identifiers are generated using the ith user's key $K_i$ and the incremental values of the ith user's counter $C_i$ to $C_i + (n\text{-}1)$. Thus, even if the shipper receives identifiers which are not in the specific order expected (based on the counter values), the shipper will still likely have a matching record in table 302 to match the received identifier. The value of $n$ may be chosen as a balance of storage capacity of the shipper's database and the extent of non-synchronization that the shipper wants to be able to handle.

In accordance with another technique, even if the user and shipper become out of synchronization by an amount greater than the value $n$, the shipper may nonetheless be able to handle the identifier as follows. Suppose, in connection with the embodiment shown in Fig. 3, that the shipper receives a package containing an identifier which does not exist in database table 302. The shipper may at that time assume that the identifier is invalid and terminate processing of the package. However, the shipper may attempt to extrapolate the existing data in the database table 302 in order to attempt to determine the user associated with the package as follows. The shipper will attempt to calculate the succeeding $x$ identifiers for each of the users in the database table 302. For example, if $x$=3, then with respect to the ith user shown in Fig. 3, the shipper will calculate the 3 identifiers in the sequence immediately following the last identifier stored for that user. Thus, in the embodiment shown in Fig. 3 in which the shipper stores $n$ records for each user, and where the last record for the ith user is $I_i^n$, then the shipper will dynamically calculate $I_i^{n+1}, I_i^{n+2}, I_i^{n+3}$ using incremental counter values of $C_i+n$, $C_i+n$+1, $C_i+n$+2 respectively. This extrapolation can be thought of as the shipper generating another $x$ database table records, as illustrated in Fig. 3 as 306. The shipper will perform this extrapolation of $x$ records for each of the users until one of the newly generated identifiers matches the received identifier, or until the shipper makes a determination that the received identifier cannot be matched to a user.

In the above embodiments in which multiple records are stored for each user, some type of table maintenance must be performed in order to maintain the database table within a reasonable size. For example, suppose the shipper stores 10 records for each user, and thus for the ith user the database table has records containing the following identifiers, $I_i^1, I_i^2, I_i^3, \cdots I_i^{10}$. Now, suppose the shipper receives the identifier $I_i^8$ on a package label from a merchant. The shipper matches the identifier to the ith user and ships the package to that user as described above. The shipper may now make the assumption that some synchronization error has resulted, and that it is now unlikely that the shipper will receive some of the earlier sequence identifiers in connection with that user. As such, and in accordance with a table maintenance operation, the shipper may delete the records containing the identifiers $I_i^1, I_i^2, I_i^3, \cdots I_i^6$, since these identifiers are unlikely to be received in connection with this user. Note that the record containing the identifier $I_i^7$ has been left in the database, in case, due to further synchronization problems, the user may still use that identifier.

In yet another embodiment the user may supply the merchant with both an identifier $I_i^j$ and the counter $C_i$ which was used to generate the identifier. This embodiment allow the shipper to more easily extrapolate a new identifier as follows. Assume that the shipper has 10 records stored for this particular user and containing the following identifiers, $I_i^1, I_i^2, I_i^3, \cdots I_i^{10}$. Now assume that the user and the shipper are out of synchronization, such that the user transmits the identifier $I_i^{14}$ to the merchant. In addition, in accordance with this embodiment, the user also transmits to the merchant $C_i$ +13, which is the counter value used to compute the identifier $I_i^{14}$ (recall, with reference to Fig. 3, that the identifier $I_i^n$ is generated using the counter value $C_i$ +(n-1)). The merchant, in turn, places on the package a label containing $I_i^{14}$ and $C_i$ +13. Upon receipt of this package, the shipper performs a database lookup but does not find the identifier $I_i^{14}$. In accordance with the above described extrapolation techniques, the shipper could attempt to generate new identifiers for each of the users. However, if, as described above, the number of extrapolations $x$=3, then for this user the shipper will dynamically generate $I_i^{11}$, $I_i^{12}, I_i^{13}$, and the received identifier, $I_i^{14}$, will not be matched and the package will be undeliverable. However, in accordance with this embodiment, when the shipper performs an initial database lookup but does not find the identifier $I_i^{14}$, the shipper will refer to the counter value on the label, which is $C_i$ +13 in this case. The shipper will then attempt to generate an identifier for each of the users in the system using the users' keys along with the received counter value $C_i$ +13. Thus, the shipper only needs to extrapolate once per user, with an improved chance of generating the appropriate identifier and thus resulting in a database match.

In yet further improvements on this technique, the shipper may extrapolate and generate identifiers for users in a particular order to improve the possibility of an early database match. For example, since the shipper knows the highest counter value currently stored for a particular user, the shipper may determine that if the range of counter values stored in the database for a particular user is already beyond the counter value received from the merchant, then it is unlikely that this particular user generated the identifier in question, and the shipper may skip this user and not dynamically generate an identifier. In accordance with yet another performance improvement, the shipper may attempt to order the extrapolations so that an identifier for the most likely user is attempted first. For example, if a particular user has stored records containing counter values in the range $C_i$ to $C_i$+10, and the shipper received the counter $C_i$ +11 on the label, the shipper may make a judgment that since the counter is only out of synchronization by one increment, that this user is a likely candidate for extrapolation.

It is noted that the above described technique of the user sending the counter $C_i$ along with the identifier may, in a limited number of cases, allow the merchant to associate certain purchases with a particular user. For example, since the merchant receives the counters, the merchant may collect these counters and attempt to make some determination of the increment algorithms and thus make some correlation between transactions. For example, assume over time a merchant receives the following combinations of identifiers and counters.

| TX ID | IDENTIFIER | COUNTER |
|-------|------------|---------|
| 1 | 123324384895 | 1 |
| 2 | 139483948395 | 129 |
| 3 | 957395739584 | 2 |
| 4 | 494958928923 | 55 |
| 5 | 957802852949 | 131 |
| 6 | 958395038503 | 88 |
| 7 | 472395023782 | 133 |
| 8 | 594848582385 | 3 |

Upon analysis of the counters, a merchant could very well make the assumption that the same user is associated with transaction identifiers (TX ID) 1, 3, and 8 because the counters for the transactions are 1, 2, and 3 respectively, which would be associated with an increment algorithm of $C_i$ =$C_i$ +1. Similarly, a merchant could also make the assumption that the same user is associated with TX IDs 2, 5, and 7 because the counters for the transactions are 129, 131, and 133 respectively, which would be associated with an increment algorithm of $C_i = C_i + 2$. Of course, these examples are simple examples of the analysis which may be done by a merchant, but they illustrate the possible danger of providing a merchant with counter values.

In order to prevent the above described correlation, in accordance with another embodiment of the invention, the user supplies the merchant with both an identifier $I_i^j$, and an encryption of the counter $C_i$ which was used to generate that identifier. Advantageously, the shipper provides users with the public key portion of a public key / private key pair in accordance with well known public key/ private key encryption schemes. The user encrypts the counter $C_i$ using the public key. The public key of the shipper is denoted as $PK_s$ and the encryption of the counter $C_i$ using the public key $PK_s$ is denoted as $E_{PK_s}(C_i)$. Thus, the user sends to the merchant $I_i^j$ and $E_{PK_s}(C_i)$. The merchant in turn sends these parameters to the shipper. In a manner similar to that described above, if the shipper cannot find a record with a matching identifier $I_i^j$ in its database, it can decrypt the counter and use it to extrapolate a new identifier as described above. In this case, however, the counters received by the merchant are encrypted, and therefore the merchant cannot discover any useful information from the counters. It is noted that $E_{PK_s}(C_i)$ may be fairly large, and as such, it may be difficult for the merchant to encode the encrypted counter on a standard shipping label. As such, in a variation of this embodiment, the merchant may only place the identifier $I_i^j$ on the shipping label. If the shipper cannot find a record with a matching identifier in its database, only then does the shipper request the associated $E_{PK_s}(C_i)$ from the merchant. The merchant may send another label containing $I_i^j$ and $E_{PK_s}(C_i)$, or $E_{PK_s}(C_i)$ may be transmitted electronically from the merchant to the shipper.

We now describe another embodiment of the invention in which the user and shipper generate identifiers dynamically, on an as needed basis, but without the use of a counter. In a manner similar to that described above in conjunction with Fig. 2, when an ith user registers with the shipper as a subscriber to the service, the shipper provides the user with a unique key $K_i$, which is known to both the user and the shipper. The identifier $I_i^j$ in this embodiment is computed as a one-way function of $K_i$ and a random number $R$ which is generated by the user for each transaction.

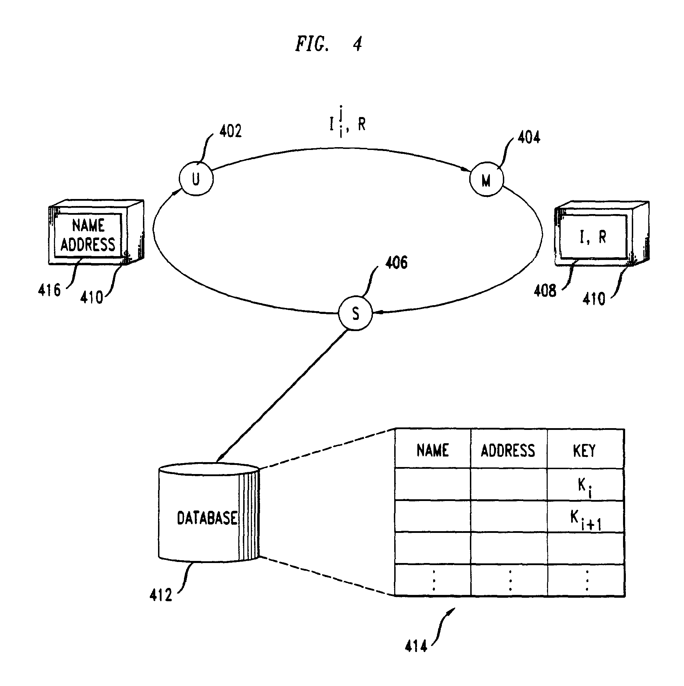

This embodiment is illustrated in conjunction with Fig. 4. When the user 402 engages in a transaction with the merchant 404, the user 402 dynamically generates $I_i^j$ based on the values of $K_i$, and a random number $R$ which is generated by the user 402. The user 402 sends the identifier $I_i^j$ and the random number $R$ to the merchant 404. The merchant 404 places the identifier $I_i^j$ and random number $R$ on label 408 of package 410 and provides the package to the shipper 406.

In accordance with this embodiment, the shipper database 412 stores a database table 414 as shown in Fig. 4. For each user $i$, the database table 414 contains a record storing the name and address of the user and the user's key $K_i$. When the shipper 406 receives the package 410, it reads the identifier $I_i^j$ and random number $R$ on label 408. The shipper then uses the received random number $R$, along with the same one-way function the user 402 used to generate the received identifier, to generate new identifiers using each of the keys $K_i$ in the database table 414. The shipper continues generating identifiers until one of the generated identifiers matches the received identifier. When a matching identifier is generated, the shipper knows that the key $K_i$ which was used to generate the matching identifier belongs to the i'th user associated with the package, and the shipper can read the associated name and address of the i'th user from the table 414. The shipper then prints a label with the name and address of the user and ships the package to the user.

It is noted that although this embodiment, in some cases, is more computationally intensive that the above described embodiments which use counters, this embodiment solves the synchronization problem of the counter embodiments because there is no requirement for the shipper or user to save any state information (e. g. counter values). In addition, this embodiment does not allow the shipper to determine any information about the user using the received random number.

Another embodiment in which a random number is used in the dynamic generation of an identifier is as follows. In this embodiment, a user generates an identifier by encrypting his/her address appended with a random number R, and transmits the encrypted text to the merchant. The merchant places the encrypted text on the label and provides the package to the shipper. Upon receipt of the package, the shipper reads the encrypted text, decrypts the encrypted text, and extracts the user's name and address. Note that in this embodiment, the shipper only needs to store a key which can be used to decrypt the encrypted text. Various well known encryption techniques, including public key/ private key encryption schemes, may be used in conjunction with this embodiment.

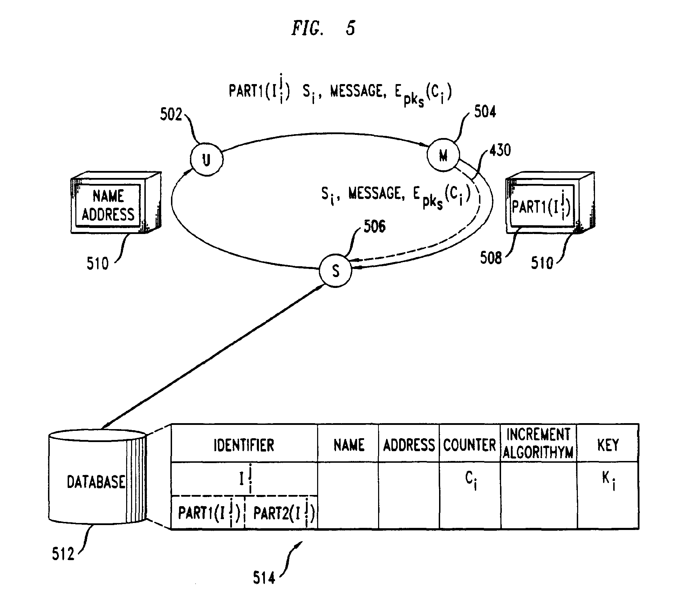

We will now address authentication of a monetary payment to the merchant in conjunction with Fig. 5. As described above, one of the problems with anonymous electronic commerce is that payment must be made from the user to the merchant. Since such payment is generally made by credit card, the merchant must know the user's name in order to process the payment. This severely limits the possibility of anonymous electronic commerce. Although payment may be arranged through another trusted third party, it would be logistically difficult to coordinate such a combination of trusted third party payee, trusted third party shipper, purchaser, and merchant. As such, in another embodiment of the invention described below, we provide an improved payment technique which may be used in conjunction with the above described anonymous delivery techniques. In accordance with this embodiment, the merchant receives payment from the shipper, and the shipper may then recover the amount of the payment (plus an optional transaction processing fee) from the user. In this embodiment, identifiers $I_i^j$ are dynamically generated by the users as described above, but the identifiers are broken into two parts, $part1(I_i^j)$ and $part2(I_i^j)$. For example, if $I_i^j$ is 32 bits, then the first 16 bits would be $part1(I_i^j)$ and the second 16 bits would be $part2(I_i^j)$. As shown in Fig. 5, the shipper database table 514 stores these two parts of the identifier. The user 502, generates a *message* which is used for payment authorization associated with an electronic transaction. For example, a typical *message* may be "pay $100". The user 502 then generates a secret $S_i$ by encrypting the *message* in accordance with a well known message authentication code (MAC) technique while using the second part of an identifier as the MAC key as follows: $S_i = MAC_{part2(I_i^j)}(message)$. Upon completion of a transaction with the merchant 504, the user 502 transmits the following parameters to the merchant 504: $part1(I_i^j), S_i$, *message*, $E_{PK_i}(C_i)$. Upon receipt of these parameters, the merchant 504 prepares a label 508 for the package 510 containing the item ordered by the user 502 and sends the package 510 to the shipper 506. As described above, the parameters sent to the merchant 504 by the user 502 may be too lengthy to conveniently be encoded on the package label 508, and as such, some of the parameters may be transmitted to the shipper 506 by the merchant 504 in another manner (e.g. electronically) as illustrated in Fig. 5 by the broken line 530. Advantageously, the label 508 contains the identifier $part1(I_i^j)$ and the other parameters associated with that identifier, namely $S_i$, *message*, $E_{PK_i}(C_i)$ are transmitted to the shipper electronically.

Upon receipt of the package 510, the shipper 506 performs a database search for the $part1(I_i^j)$ which was on the label 508. If found, the shipper 506 takes the associated $part2(I_i^j)$ from the database record, and the *message* received electronically from the merchant 504, and computes the secret $S_i = MAC_{part2(I_i^j)}(message)$. If the computed secret $S_i$ matches the secret $S_i$ received electronically from the merchant 504, then the shipper 506 determines that user 502 must have agreed to pay the price specified in the *message,* because otherwise the merchant 504 could not have computed a secret $S_i$ which matches the secret $S_i$ computed by the shipper 506. In this case, the shipper 506 can pay the merchant 504 the amount specified in the *message,* deliver the package 510 to the user 502, and charge the user 502 the shipping charge, the amount the shipper paid to the merchant, plus an appropriate transaction fee for handling the payment. It is also noted that if the computed secret $S_i$ matches the secret $S_i$ received from the merchant 504, then the user 502 cannot deny having agreed to make the payment.

If the computed secret $S_i$ does not match the secret $S_i$ received from the merchant 504, then there is a problem and appropriate exception handling would take place. It is further noted that if, upon receipt of the package 510, the shipper 506 cannot find $part(I_i^j)$ in its database 512, then the extrapolation techniques described above may be used.

The foregoing Detailed Description is to be understood as being in every respect illustrative and exemplary, but not restrictive, and the scope of the invention disclosed herein is not to be determined from the Detailed Description, but rather from the claims

It is to be understood that the embodiments shown and described herein are only illustrative of the principles of the present invention and that various modifications may be implemented by those skilled in the art without departing from the scope . of the invention. For example, various modifications and variations to the parameters passed, and the encryption of such parameters would be readily apparent to one skilled in the art. For example, the user may pass to the merchant an encrypted value of *i* representing the user's identification and/or other encrypted parameters, which if passed to the shipper, could improve the performance of the database lookup.

**Claims**

1. A method comprising the steps of:

   receiving an identifier from a merchant;
   identifying one of a plurality of users based on said received identifier, wherein each of said plurality of users may be identified based on at least two different received identifiers; and
   determining an address of said one user.

2. The method of claim 1 further comprising the step of:
   shipping a package to said one user at said determined address.

3. The method of claim 1 wherein said step of identifying comprises the step of:
   performing a database lookup using said received identifier.

4. The method of claim 3 further comprising the step of:
   if said database lookup fails to identify said one user, then:

   generating at least one identifier; and
   comparing said generated identifier with said received identifier.

5. The method of claim 4 wherein said step of generating at least one identifier comprises the step of:
   generating said at least one identifier using information stored in said database.

**6.** The method of claim 5 wherein said step of generating at least one identifier comprises the step of:
generating said at least one identifier using additional information received from said merchant.

**7.** The method of claim 6 wherein said additional information received from said merchant includes a counter.

**8.** The method of claim 7 wherein said counter is encrypted.

**9.** The method of claim 1 wherein said identifier is received from said merchant on a package label.

**10.** The method of claim 1 wherein said received identifier is a first portion of a stored value, said method further comprising the steps of:

receiving a message and a first encrypted message from said merchant;
retrieving a second portion of said stored value;
encrypting said received message using said second portion of said value to generate a second encrypted message; and
determining whether said first encrypted message matches said second encrypted message.

**11.** The method of claim 10 further comprising the step of:
validating said received message if said first encrypted message matches said second encrypted message.

**12.** The method of claim 11 wherein said message indicates a monetary amount.

**13.** The method of claim 1 wherein said step of identifying comprises the step of:
generating at least one identifier using information stored in said database.

**14.** The method of claim 13 wherein said step of generating at least one identifier comprises the step of:
generating said at least one identifier using additional information received from said merchant.

**15.** The method of claim 14 wherein said additional information received from said merchant includes a counter.

**16.** The method of claim 14 wherein said additional information received from said merchant includes a random number.

**17.** A system comprising:

means for reading an identifier received from a merchant;
means for identifying one of a plurality of users based on said received identifier, wherein each of said plurality of users may be identified based on at least two different received identifiers; and
means for determining an address of said one user.

**18.** The system of claim 17 where said means for reading an identifier comprises:
a bar code scanner.

**19.** The system of claim 17 wherein said means for identifying comprises:
means for performing a database lookup using said received identifier.

**20.** The system of claim 19 further comprising, for use when said database lookup fails:

means for generating at least one identifier; and
means for comparing said generated identifier with said received identifier.

**21.** The system of claim 20 wherein said means for generating at least one identifier comprises:
means for generating said at least one identifier using information stored in said database.

**22.** The system of claim 21 wherein said means for generating at least one identifier further comprises:
means for generating said at least one identifier using additional information received from said merchant.

**23.** The system of claim 22 wherein said additional information received from said merchant includes a counter.

**24.** The system of claim 23 wherein said counter is encrypted.

**25.** The system of claim 17 wherein said identifier is received from said merchant on a package label.

**26.** The system of claim 17 wherein said received identifier is a first portion of a stored value, said system further comprising:

means for receiving a message and a first encrypted message from said merchant;
means for retrieving a second portion of said stored value;

means for encrypting said received message using said second portion of said value to generate a second encrypted message; and
means for determining whether said first encrypted message matches said second encrypted message.

**27.** The system of claim 26 further comprising:
means for validating said received message if said first encrypted message matches said second encrypted message.

**28.** The system of claim 27 wherein said message indicates a monetary amount.

**29.** The system of claim 17 wherein said means for identifying comprises:
means for generating at least one identifier using information stored in said database.

**30.** The system of claim 29 wherein said means for generating at least one identifier comprises:
means for generating said at least one identifier using additional information received from said merchant.

**31.** The system of claim 30 wherein said additional information received from said merchant includes a counter.

**32.** The system of claim 30 wherein said additional information received from said merchant includes a random number.

**33.** A database for use by a shipper for associating a received identifier with an address, said database comprising a plurality of records with each record comprising a plurality of fields for storing data, each of said records storing at least:

a unique identifier; and
an address;
said database **characterized in that**:
at least two records contain different unique identifiers and the same address.

**34.** The database of claim 33 wherein each of said records further stores at least:

a counter; and
a key;
wherein said unique identifier is a function of said counter and said key.

**35.** The database of claim 33 wherein said unique identifier comprises a first part and a second part.

**36.** A database for use by a shipper for associating a received identifier with an address, said database comprising a plurality of records with each record comprising a plurality of fields for storing data, each of said records storing at least:

a unique identifier;
a counter;
a key; and
an address;
said database **characterized in that**:
said unique identifier is a function of said counter and said key.

**37.** The database of claim 36 wherein a particular address occurs in only one database record.

**38.** The database of claim 37 wherein when a received identifier matches a stored unique identifier in one of said database records;

said counter is said one database record is incremented; and
said unique identifier in said one database record is updated.

**39.** The database of claim 36 wherein a particular address occurs in at least two database records.

**40.** The database of claim 36 wherein said identifier comprises a first part and a second part.

FIG. 1

*FIG. 2*

| IDENTIFIER | NAME | ADDRESS | COUNTER | INCREMENT ALGORITHM | KEY |
|---|---|---|---|---|---|
| $I_i^1$ | | | $C_i$ | | $K_i$ |
| $I_{i+1}^1$ | | | $C_{i+1}$ | | $K_{i+1}$ |
| ⋮ | ⋮ | ⋮ | ⋮ | ⋮ | ⋮ |

*FIG. 3*

302

| IDENTIFIER | NAME | ADDRESS | COUNTER | INCREMENT ALGORITHM | KEY |
|---|---|---|---|---|---|
| $I_i^1$ | | | $C_i$ | | $K_i$ |
| $I_i^2$ | | | $C_i + 1$ | | $K_i$ |
| $I_i^3$ | | | $C_i + 2$ | | $K_i$ |
| $\vdots$ | | | | | |
| $I_i^n$ | | | $C_i + (n-1)$ | | $K_i$ |

DATABASE

306

| $I_i^{n+1}$ | | | $C_i + n$ | | |
|---|---|---|---|---|---|
| $I_i^{n+2}$ | | | $C_i + n + 1$ | | |
| $I_i^{n+3}$ | | | $C_i + n + 2$ | | |

*FIG.* 4

$I\,|_i^j,\ R$

402    U

404    M

406    S

NAME
ADDRESS

416    410

I, R

408    410

DATABASE

412

| NAME | ADDRESS | KEY |
|------|---------|-----|
|      |         | $K_i$ |
|      |         | $K_{i+1}$ |
|      |         |     |
| : | : | : |

414

*FIG. 5*

$PART1(I_i^j)$  $S_i$, MESSAGE, $E_{pk_s}(C_i)$

502

U

504

M

430

NAME
ADDRESS

510

$S_i$, MESSAGE, $E_{pk_s}(C_i)$

506

S

$PART1(I_i^j)$

508  510

DATABASE

| IDENTIFIER | | NAME | ADDRESS | COUNTER | INCREMENT ALGORITHYM | KEY |
|---|---|---|---|---|---|---|
| $I_i^j$ | | | | $C_i$ | | $K_i$ |
| $PART1(I_i^j)$ | $PART2(I_i^j)$ | | | | | |

512

514

**European Patent Office**

# DECLARATION

which under Rule 45 of the European Patent Convention shall be considered, for the purposes of subsequent proceedings, as the European search report

**Application Number**

EP 00 30 9859

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The subject-matter claimed in claims 1-16 falls under the provisions of Article 52(2) and (3) EPC, such subject-matter relating to a method of doing business as such.

Claims 17-40 relate to commonplace technological features for performing the business method of the method claims. Although these claims do not literally belong to the method category, they essentially claim protection for the same commercial effect as the method claims. With reference to the Guidelines, B-VIII, points 1-6, the Search Division considers that searching such commercial features would serve no useful purpose. This applies to the remaining commonplace technological features of these claims as well.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 14 August 2001 | van der Weiden, A |

EPO FORM 1504 (P04C37)